**Europäisches Patentamt**

**European Patent Office**

**Office européen des brevets**

(19)

(11) Publication number : **0 450 672 B1**

# EUROPEAN PATENT SPECIFICATION

(12)

(45) Date of publication of patent specification :
08.09.93 Bulletin 93/36

(51) Int. Cl.⁵ : **A23L 1/226, A23L 1/227**

(21) Application number : **91200343.1**

(22) Date of filing : **19.02.91**

(54) Method for preparing process flavourings.

(30) Priority : **08.03.90 EP 90200543**
**13.06.90 EP 90201522**

(43) Date of publication of application :
**09.10.91 Bulletin 91/41**

(45) Publication of the grant of the patent :
**08.09.93 Bulletin 93/36**

(84) Designated Contracting States :
**AT BE CH DE DK ES FR GB GR IT LI NL SE**

(56) References cited :
**EP-A- 0 090 356**
**EP-A- 0 136 428**
**EP-A- 0 295 509**
**EP-A- 0 356 799**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Potman, Ronald Peter, Unilever**
**Research Laboratory**
**Olivier van Noortlaan 120**
**Vlaardingen (NL)**
Inventor : **Turksma, Hessel, Unilever Research**
**Laboratory**
**Olivier van Noortlaan 120**
**Vlaardingen (NL)**
Inventor : **Overbeeke, Nicolaas**
**Flurstrasse 80B**
**W-2000 Hamburg 53 (DE)**

(74) Representative : **Jorritsma, Ruurd et al**
**Nederlandsch Octrooibureau**
**Scheveningseweg 82 P.O. Box 29720**
**NL-2502 LS The Hague (NL)**

EP 0 450 672 B1

Jouve, 18, rue Saint-Denis, 75001 PARIS

## Description

The present invention relates to a method for preparing process flavourings, said method including the preparation of a Maillard reaction mixture and heating said mixture.

The use of Maillard reactions to produce process flavourings is well known in the art. Depending on the composition of the reaction mixture used, such reactions have been found to yield flavours of very different nature, such as boiled and roasted meat, roasted nuts, baked goods, heated butter etc. The term process flavouring is used here in accordance with the definition given in the Code of Practice issued by the International Organisation of Flavour Industry (IOFI) in October 1984.

In EP-B 0 136 428 a process is described for preparing a flavorant for imparting a cooked meat or fish flavour to foodstuffs, said process comprising combining oxidized lipid material with a sulfur-containing compound and reacting the mixture by heating. In column 7 of the European patent it is observed that applicants have found that the presence of mono-, di-, or polysaccharides in the reaction mixture can detract from the organoleptic quality of the resulting flavor.

In an article titled "Study on the effect of fat in meat flavour formation" by Schrödter et al., published in Abh. Akad. Wiss. DDR, Abt. Math. Naturwiss. Technol. (1988), 107-114, Maillard reaction mixtures containing oxidized fat are described. The reaction mixtures described contain 50 wt.% of an aqueous phase, which aqueous phase is extracted for sensory evaluation.

Although the preparation of process flavourings by means of Maillard reactions as described in the art can produce flavours of good quality, we have found a way to improve said method. We have found namely, that by incorporating in the Maillard reaction mixture mildly oxidized fat, subsequent heat treatment will generate a stronger and in addition to that a more balanced process flavouring, due to the fact that also non-typical Maillard-type flavours are formed.

Accordingly the present invention is concerned with a method for preparing process flavourings, comprising the steps of:

(a) mildly oxidizing fat to such a degree that the anisidine value of the fat is increased by at least a factor 1.5,

(b) preparing a Maillard reaction mixture comprising:

(1) a carbohydrate ingredient selected from the group consisting of reducing carbohydrate, precursors of such carbohydrates, heat-degradation products of such carbohydrates and mixtures thereof,

(2) a nitrogen compound with general formula NHRR', where R and R' represent hydrogen, aliphatic group or aromatic group and where R and R' may be the same or different, and

(3) the oxidized fat obtained in step (a), the weight ratio of carbohydrate to nitrogen compound exceeding 1:20, and

(c) maintaining the reaction mixture at a temperature of more than 50°C for at least 2 minutes.

According to a very preferred embodiment of the invention the reaction mixture prepared in step (b) comprises less than 30 wt.% water, more preferably even less than 15 wt.% water. We have found that the utilization of high levels of water adversely affects the quality of the process flavouring obtained. It is noted that the present invention also encompasses the utilization of reaction mixtures which contain essentially no water at all.

A suitable way to measure the anisidine value is described in IUPAC, Standard Methods for the Analysis of Oils, Fats and Derivatives, 6th Ed. (1979), Pergamon Press, Oxford, Method 2,504, page 143.

According to a preferred embodiment of the invention, step (a) involves oxidizing the fat to such a degree that the ratio of the anisidine value and the iodine value obtained exceeds 0.05. More preferably the ratio of the anisidine value and the iodine value of the oxidized fat exceeds 0.1. Most preferably the fat is oxidized to such a degree that the latter ratio exceeds 0.2. The ratio of the anisidine value and the iodine value of an oxidized fat gives a good indication of the degree of oxidation that fat has been subjected to. If solely the anisidine value is relied upon, fats containing high levels of saturated fatty acid residues, will yield relatively low anisidine values, even if such fat is oxidized to a relatively high degree.

As the present method aims at the mild oxidation of fat, the ratio of the peroxide value and the iodine value of the oxidized fat obtained in step (a) should preferably be less than 5, more preferably be less than 1. Generally the ratio of the peroxide value and iodine value of the oxidized fat obtained in step (a) exceeds 0.01. The peroxide value indicates the amount of peroxides present in the fat and is expressed in milli-equivalent oxygen per kg fat. The way in which the peroxide value can be determined is described by P.G. Powick, J. Agric. Res. 26, 323 (1923).

In accordance with another preferred embodiment of the present method, step (a) involves oxidizing the fat to such a degree that the anisidine value of the fat is increased by at least a factor 2. According to a very preferred embodiment of the invention the anisidine value of the fat is increased by at least a factor 5 through the mild oxidation of step (a).

The terms fat and oil are used interchangeably in this document. The term fat as used here encompasses any glyceride fat, including milk fat, animal fats and vegetable fats. The term glyceride fat encompasses triglycerides, diglycerides as well as monoglycerides. suitable animal fats that may be utilized in the present method are chicken fat, salmon oil, lard and tallow. Also vegetable fats like peanut oil, sesame oil, cocoa butter and olive oil may beneficially be used in the present method. In case the aforementioned fats are used in the present method a desirable good quality process flavouring is obtained. Even refined, essentially flavourless oils may successfully be utilized in the present method as flavour compounds are generated during the process.

According to a preferred embodiment of the invention, in step (a) a fat-containing composition is employed, containing at least 10 wt.% fat, more preferably containing at least 30 wt.% fat. Most preferably the fat-containing composition contains at least 60 wt.% fat. The fat present in the fat-containing composition employed in the method, preferably, comprises at least 60 wt.%, more preferably at least 90 wt.% of a fat selected from the group consisting of: butterfat, animal fat, olive oil, sesame oil and peanut oil. According to another preferred embodiment the fat employed in step (a) of the present method contains at least 75 wt.%, more preferably, at least 90 wt.% triglycerides.

According to a preferred embodiment of the present invention the mild oxidation is carried out in the presence of an anti-oxidant. Preferably step (a) of the present method comprises the steps of (i) adding anti-oxidant to a fat-containing composition at a concentration level, calculated on the fat, of at least c∗ and (ii) keeping the composition, in the presence of water, at a temperature of more than 50°C and at most the boiling temperature of the water under the conditions applied, during a period of time ranging from 0.5 hours to 1 week. Reference is made to the co-pending not prior published European patent application No. 89203186 wherein c∗ is defined and wherein suitable anti-oxidants are mentioned.

It should be realized that steps (a) and (b) of the present method can suitably be combined. For example, the present invention encompasses a method wherein a reaction mixture containing non-oxidized fat is subjected to mild oxidation, and subsequently is heated to above 50°C for at least 2 minutes. The present invention does not encompass methods in which the three processing steps (a), (b) and (c) are carried out simultaneously. Preferably the steps (a), (b) and (c) are carried out separately and subsequently, i.e. first step (a), then step (b) and finally step (c).

Preferably in step (a) the fat is oxidized in the presence of at least 0.1% water by weight of the fat. Normally not more than 20% water by weight of fat is utilized. According to a very preferred embodiment the fat is oxidized in the presence of at least 0.2 wt.% water, more preferably even more than 0.5 wt.% water. According to another preferred embodiment of the invention, in step (a) the fat is oxidized by maintaining it at a temperature of at least 50°C for more than 30 minutes. More preferably the fat is maintained at a temperature of at least 50°C for more than 1 hour. Best results are obtained if the fat is maintained at a temperature of more than 70°C for more than 1 hour.

The oxidation of the fat in step (a) can be effected in many ways, for instance, by keeping the fat in the presence of air at a temperature of 55°C for a sufficiently long period of time. The oxidation rate observed in such a process, however, is rather low. Accordingly, in a preferred embodiment, in step (a), oxidation of the fat is carried out in the presence of water containing at least 500 ppm of a metal salt, preferably a metal salt selected from the group consisting of alkali metal salts, alkaline earth metal salts and mixtures thereof. Most preferably the metal salt used in the present method is selected from the group consisting of sodium salt, potassium salt and mixtures thereof. According to a very preferred embodiment of the invention the water contains at least 1 wt.%, more preferably even from 3 to 40 wt.% of the metal salt.

In order to obtain a pronounced positive flavour effect, the reaction mixture should contain at least 1.0 wt.% of the oxidized fat. Generally the level of oxidized fat should not exceed 80 wt.%. In order to avoid loss of volatile flavour compounds and/or evaporation of water it can be beneficial to carry out the heat treatment of the Maillard reaction mixture in a closed system. Here the term closed system includes reflux and distillation systems.

In the art many Maillard-type reactions have been described, using all kinds of reaction mixtures as starting material. In a preferred embodiment of the invention the Maillard reaction mixture of step (b) comprises at least 0.1 wt.% of the carbohydrate ingredient selected from the group consisting of reducing carbohydrate, precursors of such carbohydrates, heat-degradation products of such carbohydrates and mixtures thereof. Particularly good results can be obtained if at least 0.3 wt.% of the above carbohydrate ingredient is comprised in the Maillard reaction mixture. Most preferably the latter reaction mixture contains at least 0.8 wt.% of the carbohydrate ingredient. Here by heat-degradation products of carbohydrates are meant those components formed by heating the carbohydrate, preferably to a temperature in the range of 80°-180°C, in the absence of a nitrogen compound as used in the present Maillard reaction mixture.

In addition to the carbohydrate ingredient the Maillard reaction mixture preferably contains least 0.1 wt.% of the nitrogen compound with general formula NHRR', where R and R' represent hydrogen, aliphatic group or aromatic group and where R and R' may be the same or different. The reaction mixture preferably contains

EP 0 450 672 B1

at least 0.3 wt.% of the above introgen compounds, more preferably even more than 0.8 wt.% of said compound.

Preferably the reducing carbohydrate used in the present method is a reducing monosaccharide and the precursor is selected from the group consisting of disaccharides, oligosaccharides and mixtures thereof. In particular disaccharides can suitably be employed as precursor of reducing monosaccharides. Examples of reducing monosaccharides which can suitably be used in the present method are: glucose, fructose, (di) hydroxy acetone, pyruvic aldehyde, glyceraldehyde, erythrose, galactose, ribose, xylose, arabinose and rhamnose. Disaccharides which can suitably be used as precursor of reducing carbohydrates are: sucrose, lactose, maltose and trehalose.

Preferably the nitrogen compound employed in the method is selected from the group consisting of amino acids, compounds containing amino acid residues and mixtures thereof. More preferably the nitrogen compound is selected from the group consisting of amino acids, dipeptides, oligopeptides, polypeptides, protein and mixtures thereof. According to yet another preferred embodiment of the invention sulfur-containing compounds as defined in column 5 of the earlier mentioned European patent no. 0 136 428 constitute less than 50 wt.% preferably less than 30 wt.% of said compounds.

In order to produce a good process flavouring the reaction mixture should be maintained at a sufficiently high temperature to initiate and sustain the Maillard reaction and for a period of time sufficient to produce a perceptible flavour. The adequate heating conditions largely depend on the composition of the reaction mixture. Generally in step (c) the reaction mixture should be maintained at a temperature in the range of 60°-180°C for at least 3 minutes. Preferably the reaction mixture is maintained at a temperature in the range of 75°-175°C for at least 5 minutes. The reaction mixture prepared in step (b) can suitably be included in, for instance, a food product which food product is later on subjected to a heat treatment. Such heat treatment could be a conventional pasteurization or sterilization. Alternatively the heat treatment can consist of baking the food product, for instance in case the reaction mixture is included in a dough composition.

In the Maillard reaction the carbohydrate ingredient and nitrogen compound react in a molar ratio of about 1:1. A good process flavouring can be obtained, however, by using the carbohydrate ingredient and nitrogen compound in widely varying ratios. Preferably the reaction mixture contains at least 0.5 wt.% of the carbohydrate ingredient and at least 0.5 wt.% of the nitrogen compound. According to another preferred embodiment the reaction mixture contains the carbohydrate ingredient and amino acids in the nitrogen compound in a molar ratio in the range of 20:1 to 1:20. Here by the amino acids in the nitrogen compound are meant the amino acid residues present in such a compound. Thus a dipeptide contains 2 amino acid residues. In order to include carbohydrate ingredient and amino acids in the dipeptide in the reaction mixture in a molar ratio of 1:1, said carbohydrate and dipeptide should be combined in a molar ratio of 2:1.

Another aspect of the invention is concerned with a method of flavouring a food product, comprising the steps of:

(a) mildly oxidizing fat to such a degree that the anisidine value of the fat is increased by at least a factor 1.5,

(b) preparing a Maillard reaction mixture comprising:

(1) a carbohydrate ingredient selected from the group consisting of reducing carbohydrate, precursors of such carbohydrates, heat-degradation products of such carbohydrates and mixtures thereof,

(2) a nitrogen compound with general formula NHRR', where R and R' represent hydrogen, aliphatic group or aromatic group and where R and R' may be the same or different, and

(3) the oxidized fat obtained in step (a), the weight ratio of carbohydrate to nitrogen compound exceeding 1:20,

(c) maintaining the reaction mixture at a temperature of more than 50°C for at least 2 minutes, and

(d) adding 0.05% to 15% by weight of the food product of the process flavouring so prepared.

It is an essential aspect of this embodiment of the present invention that the addition of the process flavouring in step (d) includes the all the fat originally included therein, i.e. the present invention does not cover the addition of exclusively the aqueous phase comprised by said process flavouring.

The invention is illustrated by means of the following Examples:

Example 1

0.7 kg arachide oil (peroxide value=8.5, anisidine value=1, iodine value=95), to which 400 mg of a mixed tocopherol composition (ex Riken Vitamin co. Ltd., 70% in oil) had been added, was melted with the aid of a microwave oven. 175 g of a 16% (w/w) salt solution, made using demineralised water, was added to the arachide oil. The emulsion was heated, under reflux conditions (103°C), in a 3-necked-roundbottomed 1 l. flask equipped with a reflux condenser. The flask was placed in a 115°C oil bath and the mixture was continuously

4

stirred (emulsion necessary). After 16 hours, the salty solution was separated from the arachide oil with the aid of a centrifuge. The peroxide value and anisidine value of the mildly oxidized oil were found to be 37 and 16 respectively.

The mildly oxidized arachide oil was incorporated in a Maillard reaction mixture of the following composition:

| Ingredient | % by weight of reaction mixture |
|---|---|
| Oxidized oil | 10.0 |
| Sugar (sucrose) | 6.86 |
| Amino acid mixture | 2.85 |
| Peanut butter * | 80.3 |

\* ex Calvé, Delft, the Netherlands

The amino acid mixture utilized had the following composition:

| Amino acid | % by weight |
|---|---|
| Aspartic acid | 2.63 |
| Serine | 1.05 |
| Glutamic acid | 24.55 |
| Glycine | 1.37 |
| Alanine | 11.59 |
| Methionine | 0.31 |
| Leucine | 3.58 |
| Phenylalanine | 42.57 |
| Histidine | 5.69 |
| Tryptophane | 6.64 |

After admixture of the above ingredients, the reaction mixture (50 g.) was heated by means of an oil bath of 15°C for 15 minutes. During the last 5 minutes the mixture had a temperature of 145°C. The process flavouring composition so obtained was left to cool down to ambient temperature. After cooling the process flavouring was added to a commercial peanut butter (ex Calvé, Delft, the Netherlands) at concentration levels of 1.0 and 2.5 wt.% respectively. When compared to the commercial peanut butter, the peanut butters to which the process flavouring had been added, had a substantially more intense peanut flavour. In particular the sample containing 2.5 wt.% of the process flavouring had a very pronounced peanut flavour.

Example 2

Example 1 was repeated, using butter oil instead of arachide oil. The butter oil used initially had an anisidine value of 0.5 and a iodine value of 35. After mild oxidation, the anisidine value had increased to 3.

The mildly oxidized butter oil was incorporated in a Maillard reaction mixture of the following composition:

| Ingredient | % by weight of reaction mixture |
|---|---|
| Oxidized oil | 68.3 |
| Bolec M TM [1] | 0.8 |
| Lacprodan TM [2] | 13.0 |
| Glucose | 13.0 |
| Water | 5.0 |
| [1] Lecithin | |
| [2] Whey protein concentrate | |

100 grams of the above Maillard reaction mixture were heated to 100°C and kept at that temperature for 30 minutes. During the heating, the mixture was stirred continuously. The heat treated mixture was filtered so as to separate off the solids. The process flavour composition so obtained was found to have a very pleasant and pronounced flavour and can suitably be incorporated into dough products, kitchen margarine etc.

Example 3

1 kg beef tallow (peroxide value=10.6, anisidine value=11.4, iodine value=47) containing 800 mg of a mixed tocopherol composition (ex Jan Dekker, Tocomix E60) was heated under reflux conditions in a three-necked-roundbottomed 2.0 L flask with 250 g of a 16 % (w/w) salt solution during 24 hours. The flask was placed in a 115°C oil bath and the mixture was continuously stirred. After separation of the water-phase and the fat-phase, the water-content of the fat was measured by the Karl Fischer coulometric method in order to take into account the amount of water already included in the oxidized fat when adding of water for the subsequent reaction. The peroxide value and the anisidine value of the mildly oxidized fat were found to be 29.3 and 20.0 respectively.

The mildly oxidized tallow was incorporated in a Maillard reaction mixture of the following composition:

```
Ingredient                          % by weight of reaction mixture
Oxidized fat                              88.5
Bolec M^TM        [1]                      0.8
Lactose.1 aq.                              4.0
D-ribose                                   0.5
Cystein/maltodextrin (1:1)                 1.8
Lacprodan 80^TM  [2]                       2.7
Water            [3]                        1.7
[1] Lecithin
[2] Whey protein concentrate
[3] Including water originally present in oxidized fat
```

The solids (ingredients 3, 4, 5, and 6) were weighed into a three-necked-roundbottomed flask (250 mL) and subsequently Bolec M and the fat were added. The resulting reaction mixture (98.3 g) was stirred to obtain a fine suspension. The mixture is heated up in an oil bath and a calculated amount of water is added up to a total of 1.7%. The mixture is held at 100°C for 1 hour while stirring. Subsequently 2% of filter-aid was added and the solids were filtered off.

When tasted at a concentration of 1% of a bland tasting vegetable oil, an expert panel judged the flavoured fat to have a pronounced fried tallow character.

Addition of the product to a vegetable frying fat at a dosage of 0.5 to 1% gave an exceptionally good tallow flavour to the frying fat which lasted during deep-frying of potato-chips for a prolonged period (i.e. more than 10 frying operations). When using commercially available volatile tallow flavour concentrates, the tallow flavour disappears after two frying operations.

Example 4

1 kg lard (peroxide value=2.8, anisidine value=3.6, iodine value=62) containing 400 mg of a mixed tocopherol composition (ex Jan Dekker, Tocomix E60) was heated under reflux conditions in a three-necked-roundbottomed 2.0 L flask with 250 g of a 16 % (w/w) salt solution during 24 hours. The flask was placed in a 115°C oil bath and the mixture was continuously stirred. After separation of the water-phase and the fat-phase, the water-content of the fat was measured by the Karl Fischer coulometric method in order to take into account the amount of water already included in the oxidized fat when adding of water for the subsequent reaction. The peroxide value and the anisidine value of the mildly oxidized fat were found to be 22.5 and 15.7 respectively.

The mildly oxidized lard was incorporated in a Maillard reaction mixture of the following composition:

6

| Ingredient | | % by weight of reaction mixture |
|---|---|---|
| Oxidized fat | | 89 |
| Bolec M[TM] | [1] | 0.8 |
| Lactose.1 aq. | | 4.0 |
| D-ribose | | 0.5 |
| Cystein/maltodextrin (1:1) | | 0.9 |
| Methionine | | 0.4 |
| Lacprodan 80[TM] | [2] | 2.7 |
| Water | | 1.7 |

[1] Lecithin
[2] Whey protein concentrate

The solids (ingredients 3, 4, 5, 6, and 7) were weighted into a three-necked-roundbottomed flask (250 mL) and subsequently Bolec M and the fat were added. The resulting reaction mixture (98.3 g) was stirred to obtain a fine suspension. The mixture is heated up in an oil bath and a calculated amount of water is added up to a total of 1.7%. The mixture is held at 100°C for 1 hour while stirring. Subsequently 2% of filter-aid was added and the solids were filtered off.

When tasted at a concentration of 1% of a bland tasting vegetable oil the product was judged by an expert panel to have a good fried bacon character.

Example 5

1 kg chicken fat (peroxide value=4.5, anisidine value=3.4, iodine value=86) containing 500 mg of a mixed tocopherol composition (ex Jan Dekker, Tocomix E60) was heated under reflux conditions in a three-necked-roundbottomed 2.0 L flask with 250 g of a 16 % (w/w) salt solution during 24 hours. The flask was placed in a 115°C oil bath and the mixture was continuously stirred. After separation of the water-phase and the fat-phase, the water-content of the fat was measured by the Karl Fischer coulometric method in order to take into account the amount of water already included in the oxidized fat when adding of water for the subsequent reaction. The peroxide value and the anisidine value of the mildly oxidized fat were found to be 62.4 and 29.2 respectively.

The mildly oxidized chicken fat was incorporated in a Maillard reaction mixture of the following composition:

| Ingredient | | % by weight of reaction mixture |
|---|---|---|
| Oxidized fat | | 88.5 |
| Bolec M [TM] | [1] | 0.8 |
| Lactose.1 aq. | | 4.0 |
| D-ribose | | 0.5 |
| Cystein/maltodextrin (1:1) | | 1.8 |
| Lacprodan 80[TM] | [2] | 2.7 |
| Water | | 1.7 |

[1] Lecithin
[2] Whey protein concentrate

The solids (ingredients 3, 4, 5, and 6) were weighted into a three-necked-roundbottomed flask (250 mL) and subsequently Bolec M and the fat were added. The resulting reaction mixture (98.3 g) was stirred to obtain a fine suspension. The mixture is heated up in an oil bath and a calculated amount of water is added up to a total of 1.7%. The mixture is held at 100°C for 1 hour while stirring. Subsequently 2% of filter-aid was added and the solids were filtered off.

When tasted at a concentration of 1% of a bland tasting vegetable oil the product was judged by an expert panel to have a good fried chicken character.

EP 0 450 672 B1

**Claims**

1. Method for preparing process flavourings, comprising the steps of:
   (a) mildly oxidizing fat to such a degree that the anisidine value of the fat is increased by at least a factor 1.5,
   (b) preparing a Maillard reaction mixture comprising:
   (1) a carbohydrate ingredient selected from the group consisting of reducing carbohydrate, precursors of such carbohydrates, heat-degradation products of such carbohydrates and mixtures thereof,
   (2) a nitrogen compound with general formula NHRR', where R and R' represent hydrogen, aliphatic group or aromatic group and where R and R' may be the same or different, and
   (3) the oxidized fat obtained in step (a), the weight ratio of carbohydrate to nitrogen compound exceeding 1:20, and
   (c) maintaining the reaction mixture at a temperature of more than 50°C for at least 2 minutes.

2. Method according to claim 1, wherein the reaction mixture prepared in step (b) comprises less than 30 wt.% water, preferably less than 15 wt.% water.

3. Method according to claim 1 or 2, wherein step (a) involves oxidizing the fat to such a degree that the ratio of the anisidine value and the iodine value obtained exceeds 0.05.

4. Method according to any one of claims 1-3, wherein the reaction mixture contains at least 1.0 wt.% of the oxidized fat.

5. Method according to any one of claims 1-4, wherein in step (a) the fat is oxidized in the presence of at least 0.1%, preferably at least 0.2% water by weight of the fat.

6. Method according to any one of claims 1-5, wherein in step (a) the fat is oxidized by maintaining it at a temperature of at least 50°C for more than 30 minutes.

7. Method according to any one of claims 1-6, wherein the Maillard reaction mixture of step (b) comprises at least 0.1 wt.%, preferably at least 0.3 wt.% of the carbohydrate ingredient.

8. Method according to claim 7, wherein the reducing carbohydrate is a reducing monosaccharide and wherein the precursor is a disaccharide.

9. Method according to any one of claims 1-8, wherein the Maillard reaction mixture of step (b) comprises at least 0.1 wt.%, preferably at least 0.3 wt.% of the nitrogen compound.

10. Method according to claim 9, wherein the nitrogen compound is selected from the group consisting of amino acids, dipeptides, oligopeptides, polypeptides, protein and mixtures thereof.

11. Method according to any one of claims 1-10, wherein in step (c) the reaction mixture is maintained at a temperature in the range of 60-180°C for at least 3 minutes.

12. Method according to any one of claims 1-11, wherein the reaction mixture contains the carbohydrate ingredient and amino acids in the nitrogen compound in a molar ratio in the range of 20:1 to 1:20.

13. Method according to any one of claim 1-12, wherein in step (a) oxidation of the fat is carried out in the presence of water containing at least 500 ppm of a metal salt selected from the group consisting of alkali metal salts, alkaline earth metal salts and mixtures thereof.

14. Method of flavouring a food product, comprising the steps of:
   (a) mildly oxidizing fat to such a degree that the anisidine value of the fat is increased by at least a factor 1.5,
   (b) preparing a Maillard reaction mixture comprising:
   (1) a carbohydrate ingredient selected from the group consisting of reducing carbohydrate, precursors of such carbohydrates, heat-degradation products of such carbohydrates and mixtures thereof,
   (2) a nitrogen compound with general formula NHRR', where R and R' represent hydrogen, aliphatic group or aromatic group and where R and R' may be the same or different, and
   (3) the oxidized fat obtained in step (a), the weight ratio of carbohydrate to nitrogen compound ex-

8

ceeding 1:20,
(c) maintaining the reaction mixture at a temperature of more than 50°C for at least 2 minutes.
(d) adding 0.05% to 15% by weight of the food product of the process flavouring so prepared.

**Patentansprüche**

1. Verfahren zur Herstellung synthetischer Geschmacksstoffe, das die Schritte umfaßt:
   (a) mildes Oxidieren von Fett bis zu einem solchen Grad, daß die Anisidinzahl des Fettes um mindestens einen Faktor von 1,5 erhöht wird,
   (b) Herstellen einer Maillard-Reaktionsmischung, umfassend:
   (1) einen Kohlenhydratbestandteil, ausgewählt aus der aus reduzierendem Kohlenhydrat, Vorläufern solcher Kohlenhydrate, Wärmeabbauprodukten solcher Kohlenhydrate und Mischungen davon bestehenden Gruppe,
   (2) eine Stickstoffverbindung der allgemeinen Formel NHRR', worin R und R' Wasserstoff, eine aliphatische oder eine aromatische Gruppe bedeuten und R und R' gleich oder verschieden sein können, und
   (3) das in Schritt (a) erhaltene oxidierte Fett, wobei das Gewichtsverhältnis von Kohlenhydrat zu Stickstoffverbindung 1:20 übersteigt, und
   (c) Halten der Reaktionsmischung für mindestens 2 min auf einer Temperatur von mehr als 50°C.

2. Verfahren nach Anspruch 1, wonach die in Schritt (b) hergestellte Reaktionsmischung weniger als 30 Gew.-% Wasser, vorzugsweise weniger als 15 Gew.-% Wasser, umfaßt.

3. Verfahren nach Anspruch 1 oder 2, wonach Schritt (a) das Oxidieren des Fettes bis zu einem solchen Grad beinhaltet, daß das erhaltene Verhältnis von Anisidinzahl und Jodzahl 0,05 übersteigt.

4. Verfahren nach irgendeinem der Ansprüche 1 bis 3, wonach die Reaktionsmischung mindestens 1,0 Gew.-% des oxidierten Fettes enthält.

5. Verfahren nach irgendeinem der Ansprüche 1 bis 4, wonach das Fett in Schritt (a) in Gegenwart von mindestens 0,1 %, vorzugsweise von mindestens 0,2 % Wasser, bezogen auf das Gewicht des Fettes, oxidiert wird.

6. Verfahren nach irgendeinem der Ansprüche 1 bis 5, wonach das Fett in Schritt (a) oxidiert wird, indem man es für mehr als 30 min auf einer Temperatur von mindestens 50°C hält.

7. Verfahren nach irgendeinem der Ansprüche 1 bis 6, wonach die Maillard-Reaktionsmischung von Schritt (b) mindestens 0,1 Gew.-%, vorzugsweise mindestens 0,3 Gew.-%, des Kohlenhydratbestandteils umfaßt.

8. Verfahren nach Anspruch 7, wonach das reduzierende Kohlenhydrat ein reduzierendes Monosaccharid ist und wonach der Vorläufer ein Disaccharid ist.

9. Verfahren nach irgendeinem der Ansprüche 1 bis 8, wonach die Maillard-Reaktionsmischung von Schritt (b) mindestens 0,1 Gew.-%, vorzugsweise mindestens 0,3 Gew.-%, der Stickstoffverbindung umfaßt.

10. Verfahren nach Anspruch 9, wonach die Stickstoffverbindung aus der aus Aminosäuren, Dipeptiden, Oligopeptiden, Polypeptiden, Protein und Mischungen davon bestehenden Gruppe ausgewählt ist.

11. Verfahren nach irgendeinem der Ansprüche 1 bis 10, wonach die Reaktionsmischung in Schritt (c) für mindestens 3 min auf einer Temperatur im Bereich von 60 bis 180°C gehalten wird.

12. Verfahren nach irgendeinem der Ansprüche 1 bis 11, wonach die Reaktionsmischung den Kohlenhydratbestandteil und Aminosäuren in der Stickstoffverbindung in einem molaren Verhältnis im Bereich von 20:1 bis 1:20 enthält.

13. Verfahren nach irgendeinem der Ansprüche 1 bis 12, wonach die Oxidation des Fettes in Schritt (a) in Gegenwart von Wasser durchgeführt wird, das mindestens 500 ppm eines Metallsalzes, ausgewählt aus der aus Alkalimetallsalzen, Erdalkalimetallsalzen und Mischungen davon bestehenden Gruppe, enthält.

**14.** Verfahren zum Aromatisieren eines Lebensmittels, das die Schritte umfaßt:

(a) mildes Oxidieren von Fett bis zu einem solchen Grad, daß die Anisidinzahl des Fettes um mindestens einen Faktor von 1,5 erhöht wird,

(b) Herstellen einer Maillard-Reaktionsmischung, umfassend:

(1) einen Kohlenhydratbestandteil, ausgewählt aus der aus reduzierendem Kohlenhydrat, Vorläufern solcher Kohlenhydrate, Wärmeabbauprodukten solcher Kohlenhydrate und Mischungen davon bestehenden Gruppe,

(2) eine Stickstoffverbindung der allgemeinen Formel NHRR', worin R und R' Wasserstoff, eine aliphatische oder eine aromatische Gruppe bedeuten und R und R' gleich oder verschieden sein können, und

(3) das in Schritt (a) erhaltene oxidierte Fett, wobei das Gewichtsverhältnis von Kohlenhydrat zu Stickstoffverbindung 1:20 übersteigt,

(c) Halten der Reaktionsmischung für mindestens 2 min auf einer Temperatur von mehr als 50°C und

(d) Zugeben von 0,05 bis 15 Gew.-%, bezogen auf das Gewicht des Lebensmittels, des so hergestellten synthetischen Geschmacksstoffes.

## Revendications

**1.** Procédé pour préparer des substances aromatisantes de synthèse, comportant les étapes de :

(a) oxyder modérément une graisse à un degré tel que l'indice d'anisidine de la graisse est augmenté d'au moins un facteur de 1,5,

(b) préparer un mélange de réaction de Maillard, comportant :

(1) un ingrédient à base d'hydrate de carbone choisi parmi le groupe constitué des hydrates de carbone réducteurs, des précurseurs de ces hydrates de carbone, des produits de dégradation thermique de ces hydrates de carbone ainsi que des mélanges de ceux-ci,

(2) un composé azoté correspondant à la formule générale NHRR', dans laquelle R et R' représentent de l'hydrogène, un groupe aliphatique ou un groupe aromatique et dans laquelle R et R' peuvent être identiques ou différents, et

(3) la graisse oxydée obtenue à l'étape (a), le rapport pondéral entre l'hydrate de carbone et le composé azoté dépassant 1:20, et

(c) maintenir le mélange réactionnel à une température supérieure à 50°C pendant au moins 2 minutes.

**2.** Procédé selon la revendication 1 dans lequel le mélange réactionnel préparé au stade (b) comprend moins de 30% en poids d'eau, de préférence moins de 15% en poids d'eau.

**3.** Procédé selon la revendication 1 ou 2, dans lequel l'étape (a) implique l'oxydation de la graisse à un degré tel que le rapport de l'indice d'anisidine à l'indice d'iode obtenu dépassent 0,05.

**4.** Procédé selon l'une quelconque des revendications 1 à 3, dans lequel le mélange de réaction renferme au moins 1,0% en poids de la graisse oxydée.

**5.** Procédé selon l'une quelconque des revendications 1 à 4, dans lequel, au stade (a), la graisse est oxydée en présence d'au moins 0,1%, de préférence au moins 0,2% d'eau en poids par rapport à la graisse.

**6.** Procédé selon l'une quelconque des revendications 1 à 5, dans lequel, au stade (a), la graisse est oxydée en la maintenant à une température d'au moins 50°C pendant plus de 30 minutes.

**7.** Procédé selon l'une quelconque des revendications 1 à 6, dans lequel le mélange réactionnel de Maillard de l'étape (b) comporte au moins 0,1% en poids, de préférence au moins 0,3% en poids de l'ingrédient à base d'hydrate de carbone.

**8.** Procédé selon la revendication 7, dans lequel l'hydrate de carbone réducteur est un monosaccharide réducteur et dans lequel le précurseur est un disaccharide.

**9.** Procédé selon l'une quelconque des revendications 1 à 8, dans lequel le mélange de réaction de Maillard de l'étape (b) comporte au moins 0,1% en poids, de préférence au moins 0,3% en poids du composé azoté.

**10.** Procédé selon la revendication 9, dans lequel le composé azoté est choisi dans le groupe constitué des acides aminés, des dipeptides, des oligopeptides, des polypeptides, des protéines et des mélanges de ceux-ci.

11. Procédé selon l'une quelconque des revendications 1 à 10, dans lequel, au stade (c) le mélange de réaction est maintenu à une température dans la gamme de 60 à 180°C pendant au moins 3 minutes.

12. Procédé selon l'une quelconque des revendications 1 à 11, dans lequel le mélange réactionnel renferme l'ingrédient à base d'hydrate de carbone et les acides aminés dans le composé azoté selon un rapport molaire dans la gamme de 20:1 à 1:20.

13. Procédé selon l'une quelconque des revendications 1 à 12, dans lequel, au stade (a), l'oxydation de la graisse est mise en oeuvre en présence d'eau renfermant au moins 500 ppm d'un sel métallique choisi dans le groupe constitué par les sels de métaux alcalins, les sels de métaux alcalino-terreux et les mélanges de ceux-ci.

14. Procédé pour préparer des substances aromatisantes de synthèse, comportant les étapes de :
   (a) oxyder modérément une graisse à un degré tel que l'indice d'anisidine de la graisse est augmenté d'au moins un facteur de 1,5,
   (b) préparer un mélange de réaction de Maillard, comportant :
      (1) un ingrédient à base d'hydrate de carbone choisi parmi le groupe constitué des hydrates de carbone réducteurs, des précurseurs de ces hydrates de carbone, des produits de dégradation thermique de ces hydrates de carbone ainsi que des mélanges de ceux-ci,
      (2) un composé azoté correspondant à la formule générale NHRR', dans laquelle R et R' représentent de l'hydrogène, un groupe aliphatique ou un groupe aromatique et dans laquelle R et R' peuvent être identiques ou différents, et
      (3) la graisse oxydée obtenue à l'étape (a), le rapport pondéral entre l'hydrate de carbone et le composé azoté dépassant 1:20,
   (c) maintenir le mélange réactionnel à une température supérieure à 50°C pendant au moins 2 minutes, et
   (d) ajouter de 0,05% à 15% en poids du produit alimentaire de la substance aromatisante de synthèse ainsi préparée.